# EUROPÄISCHE PATENTANMELDUNG

(11) **EP 1 146 414 A2**
(43) Veröffentlichungstag der Anmeldung: **17.10.2001**
(21) Anmeldenummer: 01108457.1
(22) Anmeldetag: 04.04.2001
(51) Int. Cl.: G06F 1/16

(54) **Terminal zum Bedienen und/oder zur Anzeige der Betriebswerte einer Maschine**

(30) Priorität: 14.04.2000 DE 10018490
(71) Anmelder: Winkler + Dünnebier Aktiengesellschaft, 56564 Neuwied (DE)
(72) Erfinder: Junk, Paul B., Dr., 56566 Neuwied (DE)

(57) **Zusammenfassung**

Die Erfindung betrifft ein portables Terminal, insbesondere zur Anzeige der Betriebswerte einer Maschine, wie z.B. deren Arbeitsgeschwindigkeit, Temperaturen an bestimmten Meßstellen und ähnliches.

Der Kern der Erfindung liegt darin, daß das Display des Anzeigemonitors als Brille ausgebildet ist, auf deren "Gläser" die angezeigten Betriebswerte der Maschine abzulesen sind, während gleichzeitig durch diese "Gläser" hindurch die Umgebung ― insbesondere die zu überwachende Maschine ― beobachtet werden kann.

## Beschreibung

Die Erfindung betrifft ein Terminal zum Bedienen und/oder zur Anzeige der Betriebswerte einer Maschine, insbesondere betrifft sie ein Terminal, das portabel ausgebildet ist und von der Bedienperson bei ihrer Bewegung entlang der Maschine mitgeführt wird.

Herkömmliche Terminals bestehen in der Regel aus mindestens einem Monitor, der zumeist zusammen mit einem Bedienpult an zentraler Stelle einer Maschine angeordnet ist.

Bei sehr großen Maschinen von vielleicht 10 Metern Länge und mehr sind oftmals einige solcher Monitore über die Maschinenlänge verteilt, so daß der Maschinenführer, unabhängig von seinem Standort entlang der Maschine, möglichst stets einen der Monitore im Blickfeld behalten kann.

Bekannt sind auch tragbare Terminale, die außer der Anzeige des Betriebszustandes auf einem Monitor, auch eine Einflußnahme auf die Maschine durch den Maschinenführer zulassen. Dazu sind auf dem Terminal Tasten angeordnet oder dessen Monitor ist als sogenannter Touchscreen ausgebildet.

Ein solches tragbares Terminal wird u.a. von der Firma KEBA GmbH, Göttingen, unter der Typenbezeichnung KETOP G 100 vertrieben und im Verkaufsprospekt näher beschrieben.

Nachteilig an den fixen Terminals ist, daß - selbst wenn der hohe Aufwand für mehrere Monitore in Kauf genommen wird - der Maschinenführer die Monitore nicht stets im Auge behalten kann, z.B. etwa dann, wenn Arbeiten an der Maschine erforderlich werden, wenn also der Blick auf die Arbeitsstelle gerichtet ist. Dadurch kann insbesondere nicht die Auswirkung eines Einstellvorganges auf die Arbeitsweise der Maschine unmittelbar beobachtet werden.

Tragbaren Terminals der zuvor beschriebenen Art haften ebenfalls erhebliche Nachteile an. Sie reduzieren zwar die erforderliche Anzahl der Monitore entlang der Maschine, dafür aber werden die Hände des Maschinenführers für das Halten des Terminals benötigt und sind somit nicht mehr für Arbeiten an der Maschine frei. Wird das Terminal aus der Hand gelegt, so kommt es bei Arbeiten an der Maschine in den seltensten Fällen im Blickfeld der Bedienperson zu liegen.

Aufgabe der Erfindung ist es daher, ein portables Terminal zum Bedienen und/oder zur Anzeige der Betriebswerte einer Maschine, bestehend aus einem Bedienteil und/oder einem Monitor zur Anzeige dieser Betriebswerte derart auszubilden, daß es unabhängig von der Position des Maschinenführers und dessen Blickrichtung stets im Blickfeld des Maschinenführers liegt.

Gelöst wird die Aufgabe der Erfindung dadurch, daß das Terminal am Körper des Maschinenführers anbringbar ausgebildet ist, derart, daß das Displays des Monitors stets im Blickfeld dieser Person liegt.

Um sicherzustellen, daß die vom Display angezeigten Maschinendaten unabhängig von der Kopfhaltung des Maschinenführers stets im zentralen Bereich von dessen Gesichtsfeld liegt, ist in einer besonders zweckmäßigen Ausführungsform das Display des Monitors als Brille ausgebildet, die gleichzeitig sowohl die Betriebswerte der Maschine darstellt als auch die Umgebung zu erkennen erlaubt.

Der mit der Erfindung erzielte Vorteil liegt insbesondere darin, daß der Maschinenführer unabhängig von seiner Position entlang der Maschine und unabhängig von seiner momentanen Blickrichtung stets sowohl den Gegenstand, auf den sein Blick gerichtet ist, als auch die zur Anzeige gebrachten Maschinendaten vor Augen hat.

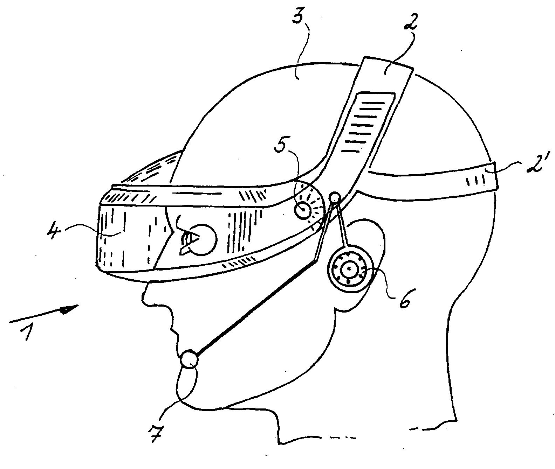

Ein Ausführungsbeispiel des erfindungsgemäßen Terminals ist in der Zeichnung dargestellt und wird im folgenden in seinem Zusammenspiel mit der zu überwachenden Maschine näher beschrieben.

Die Zeichnung zeigt eine perspektivische Seitenansicht eines als Brille ausgebildeten Displays auf dem Kopf des Anwenders.

Das erfindungsgemäße Terminal zum Bedienen und/oder Überwachen einer Maschine weist in seiner bevorzugten Ausführungsform einen als Brille ausgebildeten Monitor auf, die hier beispielhaft in der Zeichnung dargestellt ist. Dieser Monitor 1 wird durch Haltebügel 2 und 2' am Kopf 3 des Maschinenführers befestigt und deckt mit seinem Sichtteil 4 in etwa dessen Augenbereich ab. Im Sichtteil 4 befindet sich ein hier nicht näher dargestelltes Display, auf dem die interessierenden Maschinendaten dem Maschinenführer zur Anzeige gebracht werden. Gleichzeitig soll er auch die Umgebung im Auge behalten können, etwa um ungefährdet an der Maschine entlang gehen zu können oder um die einwandfreie Funktion der Maschine im Auge zu behalten.

Eine erste Möglichkeit, dies zu erreichen, liegt in dr Anwendung von halbdurchsichtigen LCD-Displays. Im vorliegenden Anwendungsfall handelt es sich dabei um kleine, etwa briefmarkengroße LCD-Bildschirme vor den Augen der Bedienperson. Auf diesen Bildschirmen sind zum einen die eingespielten Bilder oder Informationen zu erkennen, zum anderen ist durch sie hindurch aber auch die dahinter im Blickfeld des Betrachters liegende Umgebung zu erkennen. Der "Durchscheingrad" der Displays ist dabei in weiten Grenzen über eine Reguliereinrichtung z.B. an die Helligkeit des Umgebungslichtes und an andere Einflüsse anpaßbar.

In einer anderen Ausführungsform des Sichtteils wird zum Erreichen der "Durchsichtigkeit" ein hier nicht dargestelltes optisches Zusammenführsystem, z.B. ein Halbspiegel, eingebracht, in dem die Bilder der Displays und das Bild der Umgebung zusammengeführt und gemeinsam den Augen des Betrachters zugeleitet werden.

In einer dritten, besonders einfachen Ausführungsform wird die gleichzeitige Betrachtung von Umgebung und Display dadurch erreicht, daß nur vor einem Auge ein Display angeordnet ist, während für das andere Auge freie Durchsicht besteht.

In einer vierten Ausführungsform schließlich, die wiederum ein beidäugiges, allerdings nur fast gleichzeitiges Betrachten von Display und Umgebung gestattet, ist der Sichtteil 4 des Monitors 1 um einen Drehpunkt 5 leicht aufwärts geklappt. Dadurch kann die Person bei einem etwas aufwärts gerichteten Blick die Displays betrachten, bei leicht gesenkten Augen die vor ihr liegende Umgebung sehen.

Im übrigen ist die Bilddarstellung auf den Displays im Regelfall in Farbe und zweidimensional. Bei hohen Anforderungen an die Informationsdichte und Übersichtlichkeit ist eine dreidimensionale Anzeigeform möglich, während für geringere Ansprüche ein monochromatisches Display gewählt werden kann.

Über die optische Anzeige der Betriebszustände der Maschine hinaus verfügt der Monitor 1 noch über eine akustische Anzeige in Form eines Kopfhörers 6, der am Haltebügel 3 befestigt ist und sich in der Nähe des Ohres des Benutzers befindet. In erster Linie dient dieser Hörer 6 dazu, im Falle einer Fehlfunktion der zu überwachenden Maschine, einen Warnton abzugeben. In Weiterbildung des Ausführungsbeispieles lassen sich damit aber auch Betriebswerte der zu überwachenden Maschine in Sprachform übertragen.

Das Bedienteil des Terminals besteht in einer ersten Ausführungsform aus einem hier nicht dargestellten Tastenfeld, das ähnlich einer Armbanduhr am Handgelenk getragen wird. Zum einen wird damit der Monitor gesteuert, z.B. welche Maschinendaten zur Anzeige gebracht werden sollen, Helligkeit des Bildes, Durchscheinungsgrad der Displays etc., zum anderen wird über dieses Tastenfeld auch die zu überwachende Maschine gesteuert.

Eine andere Ausführungsform des Bedienteils erlaubt eine Bedienungsform des Monitors bzw. der Maschine, die an eine Bedienung über einen sogenannten Touchscreen erinnert. Wegen der Kleinheit der Displays und ihrer Anordnung innerhalb einer Brille sind sie für die Bedienperson natürlich nicht unmittelbar zugängig. Stattdessen findet ein sogenannter Datenhandschuh Verwendung, mit dessen Hilfe - ähnlich dem Mauszeiger auf dem Bildschrim eines PC - durch Bewegung eines oder mehrerer Finger eine Marke auf dem Display verschoben wird. Auf dem Display sind eine Vielzahl von Symbolen sichtbar, wovon jedes für eine bestimmte Funktion steht. Durch Antasten eines Symbols mit der vom Datenhandschuh bewegten Marke wird die betreffende Funktion aktiviert.

Schließlich ist noch die Sprachsteuerung von Maschine und/oder Monitor vorgesehen. Dabei kann es sich um eine reine Sprachsteuerung, also der Steuerung sämtlicher Funktionen, handeln, vorzugsweise aber kommt sie parallel zur konventionellen und etwas langsameren Befehlseingabe über das Tastenfeld zum Einsatz und bleibt einigen wenigen, besonders wichtigen Steuerbefehlen - wie z.B. dem Notstopbefehl im Störungsfall - vorbehalten, der dann blitzschnell durch Zuruf erfolgt.

Für diese Sprachsteuerung ist am Haltebügel 3 des Monitors 1 ein Mikrofon 7 derart befestigt, daß es das gesprochene Wort des Maschinenführers aufzunehmen gestattet, ohne gleichzeitig allzuviel Umgebungsgeräusche zu übertragen.

Der Transfer der anzuzeigenden Daten von der Maschine zum Terminal bzw. der Steuerbefehle vom Terminal an die Maschine erfolgt in Form von elektrischen Impulsen, die im einfachsten Fall über eine Drahtverbindung geführt werden. Dazu sind entlang der Maschine in Abständen von wenigen Schritten Steckplätze vorgesehen, in denen ein Verbindungskabel zwischen Maschine und Terminal eingesteckt werden kann. Die Stromversorgung für das Terminal erfolgt ebenfalls über dieses Kabel.

In Weiterbildung des Ausführungsbeispiels, insbesondere um die Bewegungsfreiheit des Maschinenführers zu verbessern, erfolgt die Datenübertragung drahtlos. Dazu sind, sofern nur die Anzeige der Betriebswerte der Maschine auf dem Monitor angestrebt wird, ein Sender in der Maschine und ein Empfänger im Terminal eingebaut. Zur Steuerung der Maschine über das Terminal finden zusätzlich ein Sender im Terminal und ein Empfänger in der Maschine Anwendung.

Bei der drahtlosen Datenübertragung zwischen Terminal und Maschine erfolgt die Stromversorgung des Terminals über wiederaufladbare Batterien, die zweckmäßigerweise zu einem Paket zusammengefaßt und in einem separaten kleinen Gehäuse am Gürtel des Maschinenführers getragen werden. In diesem kleinen Gehäuse finden dann auch Sender und Empfänger des Terminals ihren Platz. Sind Sender und Empfänger des Terminals als Hochfrequenzgeräte ausgebildet, so dient die Verbindungsschnur zwischen Batteriegehäuse und Monitor gleichzeitig als Antenne.

## Patentansprüche

1. Portables Terminal zum Bedienen und/oder zur Anzeige der Betriebswerte einer Maschine, bestehend aus einem Bedienteil und/oder einem Monitor zur Anzeige dieser Betriebswerte, **dadurch gekennzeichnet, daß** das Terminal am Körper des Maschinenführers anbringbar ausgebildet ist, derart, daß das Display des Monitors (1) stets im Blickfeld dieser Person liegt.

2. Portables Terminal nach Anspruch 1, **dadurch gekennzeichnet, daß** das Display des Monitors (1) in Form einer Brille ausgebildet ist.

3. Portables Terminal nach Anspruch 2, **dadurch gekennzeichnet, daß** die Brille derart ausgebildet ist, daß sie gleichzeitig sowohl die Betriebswerte der Maschine darstellt als auch die Umgebung zu erkennen erlaubt.

4. Brille nach Anspruch 3, **dadurch gekennzeichnet, daß** vor jedem Auge des Trägers ein halb-durchsichtiges Display angeordnet ist.

5. Brille nach Anspruch 3, **gekennzeichnet durch** ein darin angeordnetes optisches Zusammenführsystem, das sowohl die Abbildungen auf den Displays, als auch das Bild der in Blickrichtung ligenden Umgebung aufnimmt und gemeinsam den Augen des Betrachters zuführt.

6. Brille nach Anspruch 3, **dadurch gekennzeichnet, daß** die Displays leicht aufwärts geklappt angeordnet sind, derart, daß bei leicht aufwärts gerichtetem Blick die Displays im Blickfeld liegen, bei leicht abwärts gerichteten Augen der Blick auf die Umgebung frei ist.

7. Brille nach Anspruch 2 bis 6, **dadurch gekennzeichnet, daß** sie ein dreidimensionales Bild erstellt.

8. Brille nach Anspruch 3, **dadurch gekennzeichnet, daß** sie für ein Auge durchsichtig ist, während vor dem anderen Auge ein Display angeordnet ist.

9. Portables Terminal nach Anspruch 1, **dadurch gekennzeichnet, daß** dessen Bedienteil als ein am Handgelenk des Maschinenführers befestigtes Tastenfeld ausgebildet ist.

10. Portables Terminal nach Anspruch 1, **dadurch gekennzeichnet, daß** dessen Bedienteil als sogenannter Datenhandschuh ausgebildet ist.

11. Portables Terminal nach Anspruch 1, **dadurch gekennzeichnet, daß** zum drahtlosen Transfer der Daten von Maschine zum Terminal und umgekehrt das Terminal mit einem Sender und einem Empfänger ausgerüstet ist.

12. Portables Terminal nach Anspruch 11, **dadurch gekennzeichnet, daß** Sender und Empfänger als Infrarotgeräte ausgebildet sind.

13. Portables Terminal nach Anspruch 11, **dadurch gekennzeichnet, daß** Sender und Empfänger als Hochfrequenzgeräte ausgebildet sind.

14. Portables Terminal nach Anspruch 1, **gekennzeichnet durch** einen elektro-akustischen Wandler (6) im Bereich des Ohres der Bedienperson zur akustischen Ausgabe der Betriebswerte der Maschine und/oder eines Warnsignals bei einer Störung der zu überwachenden Maschine.

15. Vorrichtung nach Anspruch 14, **dadurch gekennzeichnet, daß** die akustische Ausgabe der Betriebswerte der zu überwachenden Maschine in Form von Sprache erfolgt.

16. Portables Terminal nach Anspruch 1, **gekennzeichnet durch** ein Mikrofon (7) zum Bedienen des Monitors (1) und/oder der Maschine **durch** Sprachsteuerung.
